# EUROPEAN PATENT APPLICATION

(11) **EP 4 142 384 A1**
(43) Date of publication of application: **01.03.2023**
(21) Application number: 21792944.7
(22) Date of filing: 20.04.2021
(51) Int. Cl.: H04W 64/00

(54) **POSITIONING METHOD, COMMUNICATION DEVICE, AND NETWORK DEVICE**

(30) Priority: 22.04.2020 CN 202010323445
(71) Applicant: Vivo Mobile Communication Co., Ltd., Dongguan, Guangdong 523863 (CN)
(72) Inventor: ZHUANG, Zixun, Dongguan, Guangdong 523863 (CN); WANG, Yuanyuan, Dongguan, Guangdong 523863 (CN); WU, Huaming, Dongguan, Guangdong 523863 (CN); SI, Ye, Dongguan, Guangdong 523863 (CN); SUN, Peng, Dongguan, Guangdong 523863 (CN)
(74) Representative: Lavoix
(86) International application number: PCT/CN2021/088366
(87) International publication number: WO 2021/213376

(57) **Abstract**

This application pertains to the communications field, and discloses a positioning method, a communications device, and a network device. The positioning method includes: receiving first information, where the first information includes at least one of first machine learning model information, first preprocessing model information, and first error model information; and determining, based on the first information, information related to a location of a terminal device.

## Description

### CROSS-REFERENCE TO RELATED APPLICATIONS

The present invention claims priority to Chinese Patent Application No. 202010323445.9, filed with the China National Intellectual Property Administration on April 22, 2020, and entitled "POSITIONING METHOD, COMMUNICATIONS DEVICE, AND NETWORK DEVICE", which is incorporated herein by reference in its entirety.

### TECHNICAL FIELD

This application relates to the communications field, and in particular, to a positioning method, a communications device, and a network device.

### BACKGROUND

Currently, increasingly high accuracy is required for positioning of user equipment (User Equipment, UE, which may also be referred to as a terminal device). For example, in the Industrial Internet of Things (Industrial Internet of Things, IIoT) scenario, the positioning accuracy is required to be extremely high.

However, in a complex smart factory environment, for example, with debris densely distributed inside the factory, there are many multipath situations and high-probability non-line of sight (Non-Line of Sight, NLOS) situations. However, when there are many NLOS situations, positioning accuracy of many conventional time-based or angle-based positioning methods is greatly affected. With inaccurate measurement of information such as time and angle, positioning performance is greatly deteriorated.

Therefore, the inventors have found at least the following problem in the prior art: When high positioning accuracy is required, a solution is needed which can implement accurate positioning in situations of complex multipath and NLOS situations.

### SUMMARY

One of technical problems to be resolved by the embodiments of this application is how to implement accurate positioning of UE in complex multipath and NLOS situations.

According to a first aspect, an embodiment of this application provides a positioning method applied to a communications device, where the method includes: receiving first information, where the first information includes at least one of first machine learning model information, first preprocessing model information, and first error model information; and determining, based on the first information, information related to a location of a terminal device.

According to a second aspect, an embodiment of this application provides a communications device, where the communications device includes: a receiving module, configured to receive first information, where the first information includes at least one of first machine learning model information, first preprocessing model information, and first error model information; and a positioning module, configured to determine, based on the first information, information related to a location of a terminal device.

According to a third aspect, an embodiment of this application provides a terminal device, including a memory, a processor, and a program or instructions stored in the memory and capable of running on the processor, where when the program or instructions are executed by the processor, the steps of the method according to the first aspect are implemented.

According to a fourth aspect, an embodiment of this application provides a readable storage medium, where the readable storage medium stores a program or instructions, and when the program or instructions are executed by a processor, the steps of the method according to the first aspect are implemented.

According to a fifth aspect, an embodiment of this application provides a positioning method applied to a network device, where the method includes: sending first information to a communications device, where the first information includes at least one of first machine learning model information, first preprocessing model information, and first error model information, where the first information is used for the communications device to determine information related to a location of a terminal device.

According to a sixth aspect, an embodiment of this application provides a network device, where the network device includes a sending module, configured to send first information to a communications device, where the first information includes at least one of first machine learning model information, first preprocessing model information, and first error model information, where the first information is used for the communications device to determine information related to a location of a terminal device.

According to a seventh aspect, an embodiment of this application provides a network device, including a memory, a processor, and a program or instructions stored in the memory and capable of running on the processor, where when the program or instructions are executed by the processor, the steps of the method according to the first aspect are implemented, or when the program or instructions are executed by the processor, the steps of the method according to the fifth aspect are implemented.

According to an eighth aspect, an embodiment of this application provides a readable storage medium, where the readable storage medium stores a program or instructions, and when the program or instructions are executed by a processor, the steps of the method according to the fifth aspect are implemented.

In the embodiments of this application, the information related to the location of the terminal device may be determined based on the preconfigured first information, so that positioning of the terminal device is further implemented, where the first information includes but is not limited to at least one of the first machine learning model information, the first preprocessing model information, and the first error model information. In this way, by providing a positioning solution based on at least one of training models such as a machine learning model, a preprocessing model, and an error model, the multipath and NLOS problems can be effectively resolved. Therefore, positioning accuracy is improved.

### BRIEF DESCRIPTION OF DRAWINGS

The accompanying drawings described herein are intended for better understanding of this application, and constitute a part of this application. Exemplary embodiments and descriptions thereof in this application are intended to interpret this application and do not constitute any improper limitation on this application. In the accompanying drawings:
FIG. 1 is a first schematic flowchart of a positioning method according to an embodiment of this application;
FIG. 2 is a second schematic flowchart of a positioning method according to an embodiment of this application;
FIG. 3 is a schematic structural diagram of a communications device according to an embodiment of this application;
FIG. 4 is a first schematic structural diagram of a network device according to an embodiment of this application;
FIG. 5 is a schematic structural diagram of a terminal device according to an embodiment of this application; and
FIG. 6 is a second schematic structural diagram of a network device according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application without creative efforts shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, the term "and/or" in the specification and claims indicates at least one of connected objects, and the character "/" generally represents an "or" relationship between associated objects.

The technical solutions of this application may be applied to various communications systems, for example, global system for mobile communications (Global System for Mobile communications, GSM), code division multiple access (Code Division Multiple Access, CDMA), wideband code division multiple access (Wideband Code Division Multiple Access, WCDMA), general packet radio service (General Packet Radio Service, GPRS), long term evolution or long term evolution advanced (Long Term Evolution Advanced, LTE-A), and NR.

User equipment UE, which may also be referred to as a terminal device (Mobile Terminal), mobile user equipment, or the like, may communicate with one or more core networks via radio access network (Radio Access Network, RAN). The user equipment may be a terminal device, such as a mobile phone (or referred to as a "cellular" phone) or a computer with a terminal device. For example, the user equipment may be a portable, pocket-sized, handheld, computer built-in, or in-vehicle mobile apparatus, which exchanges voice and/or data with the radio access network.

A network device, which may also be referred to as a base station, may be a base transceiver station (Base Transceiver Station, BTS) in GSM or CDMA, or may be a NodeB (NodeB) in WCDMA, or may be an evolved NodeB (evolutional NodeB, eNB or e-NodeB) in LTE or a 5G NodeB (gNB).

The technical solutions provided in the embodiments of this application are hereinafter described in detail with reference to the accompanying drawings.

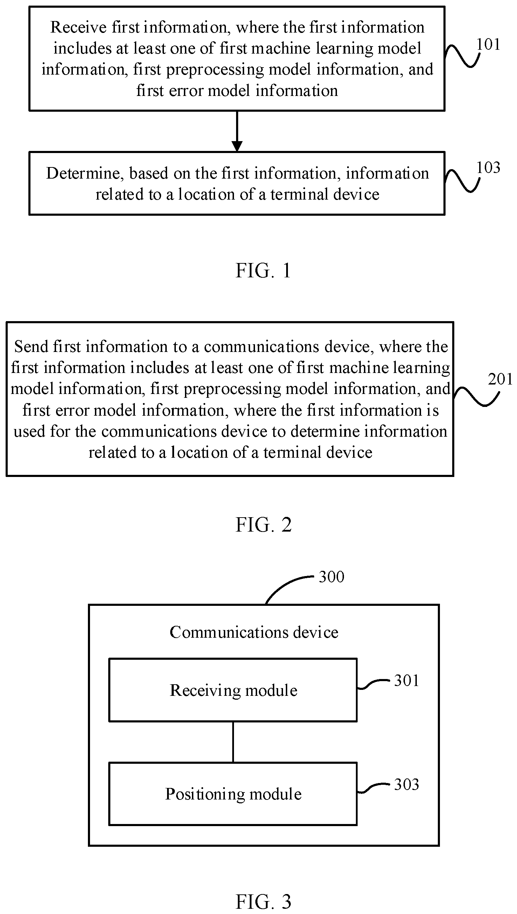

Referring to FIG. 1, an embodiment of this application provides a positioning method. The method is performed by a communications device. Optionally, the communications device may be a terminal device or an access network device (such as a base station). The method includes the following steps.

Step 101: Receive first information, where the first information includes at least one of first machine learning model information, first preprocessing model information, and first error model information.

Optionally, the first information may be provided by a network device such as a location management function (Location Management Function, LMF) entity. Certainly, the first information may alternatively come from other sources. This is not specifically limited herein.

Optionally, the first machine learning model information includes but is not limited to: a machine learning or neural network or deep neural network model and parameters of the machine learning or neural network or deep neural network model.

The machine learning or neural network or deep neural network model includes but is not limited to: convolutional neural networks (Convolutional Neural Networks, CNN) such as GoogLeNet and AlexNet; recurrent neural networks (Recurrent Neural Network, RNN), and long short-term memory networks (Long Short-Term Memory, LSTM); recurrent neural tensor networks RNTN; generative adversarial networks (Generative Adversarial Networks, GAN); deep belief networks (DeepBeliefNetwork, DBN); and restricted Boltzmann machines (Restricted BoltzmannMachine, RBM). The parameters of the machine learning or neural network or deep neural network model include but are not limited to weight, step, mean value, and variance.

Optionally, the first preprocessing model information includes but is not limited to at least one of the following: a filter parameter or model; a convolutional layer parameter or model; a pooling layer parameter or model; a discrete cosine transform (Discrete Cosine Transform, DCT) parameter or model; a wavelet transform parameter or model; a parameter or model of a channel impulse processing method; a parameter or model of a waveform processing method; and a parameter or model of a signal correlation sequence processing method. The model herein may refer to a function model, a network model, a downsampling model, an imaging model, or the like. The parameters herein may refer to weight, step, mean value, and variance.

Optionally, the first error model information includes but is not limited to at least one of second error model information and third error model information.

The second error model information includes but is not limited to at least one of location error compensation information, measurement error compensation information, device error compensation information, and parameter adjustment information. In this way, based on the second error model information, error compensation can be performed on a positioning result, a measurement result, an error caused by a device, or a parameter error.

The third error model information includes at least one of machine learning model compensation information, preprocessing model compensation information, location error model compensation information, measurement error model compensation information, device error model compensation information, and parameter adjustment model compensation information. In this way, based on the third error model information, error compensation or adjustment can be performed on the foregoing model or parameter.

Optionally, the foregoing manner of receiving the first information may include but is not limited to at least one of the following:

(1) The first information is carried in a positioning assistance data information element (Information element, IE). It may be understood that the first information may be obtained from the positioning assistance data information element (ProvideAssistanceData IE). In other words, the first information may be sent to the communications device by the network device by unicast.

(2) The first information is carried in a positioning system information block (posSIB). It may be understood that the first information may be obtained from the posSIB. In other words, the first information may be sent to the communications device by the network device by broadcast.

The posSIB is a cell-specific (cell specific) posSIB or an area-specific (area-specific) posSIB. In other words, the first information sent by broadcast may be broadcast within a cell, or may be broadcast within an area.

Step 103: Determine, based on the first information, information related to a location of a terminal device.

In this embodiment of this application, the information related to the location of the terminal device may be determined based on the preconfigured first information, so that positioning of the terminal device is further implemented, where the first information includes but is not limited to at least one of the first machine learning model information, the first preprocessing model information, and the first error model information. In this way, by providing a positioning solution based on at least one of training models such as a machine learning model, a preprocessing model, and an error model, the multipath and NLOS problems can be effectively resolved. Therefore, positioning accuracy is improved.

Optionally, in the positioning method in this embodiment of this application, the step 103 may be specifically performed as follows:
determining, based on the first information and first measurement information of the terminal device, the information related to the location of the terminal device, where the first measurement information is obtained based on signal measurement.

It may be understood that when the information related to the location of the terminal device is determined based on the first information, optionally, the determining may be performed with reference to the first measurement information of the terminal device, to further improve accuracy of positioning the terminal device. The first measurement information of the terminal device may include but is not limited to at least one of the first measurement information of the terminal device obtained by the terminal device based on signal measurement and the first measurement information of the terminal device obtained by the access network device based on signal measurement. The first measurement information of the terminal device may be obtained by the terminal device based on signal measurement, or may be obtained by the access network device based on signal measurement. This is not specifically limited in this embodiment of this application.

Optionally, in the positioning method in this embodiment of this application, the first measurement information includes but is not limited to at least one of the following: a channel impulse response of the terminal device; a signal waveform of the terminal device; a correlation sequence or waveform of the terminal device; and a signal measurement result of the terminal device, where the signal measurement result includes but is not limited to a signal measurement result obtained based on a positioning method such as an enhanced cell identification (Enhanced Cell-ID, E-CID), an observed time difference of arrival (Observed Time Difference of Arrival, OTDOA), a new radio enhanced cell identification (New Radio Enhanced Cell-ID, NR-ECID), a multi-round-trip time (Multi-Round-Trip Time, Multi-RTT), a downlink angle of departure (Downlink Angle of Departure, DL-AOD), a downlink time difference of arrival (Downlink Time Difference Of Arrival, UTDOA), an uplink angle of arrival (Uplink Angle of Arrival, UL-AOA), or an uplink time difference of arrival (Uplink-time Difference Of Arrival, UTDOA).

Optionally, in the positioning method in this embodiment of this application, the information related to the location of the terminal device includes but is not limited to at least one of the following.
(1) Positioning result information of the terminal device. The positioning result information may be a specific location of the terminal device obtained by performing location calculation based on corresponding measurement information (such as the first measurement information).

In an example, if the first information includes the first machine learning model information, the positioning result information of the terminal device may include terminal location information determined based on the first machine learning model information and the first measurement information.

It may be understood that, based on the first machine learning model information and the first measurement information, corresponding location calculation can be performed to accurately obtain the specific location of the terminal device. For example, the first machine learning model information may include the machine learning or neural network or deep neural network model for implementing location calculation. In this way, the first measurement information can be used as an input of the machine learning or neural network or deep neural network model, and the terminal location information can be output after model estimation and calculation. Optionally, the machine learning or neural network or deep neural network model can be obtained through pre-training based on a large amount of training data in an area that is obtained through field signal collection, where the training data includes but is not limited to a channel impulse response, RSRP, and an actual location of the terminal.

In another example, if the first information includes the first error model information, the positioning result information of the terminal device may further include positioning result information of the terminal device which has been error compensated based on the first error model information. In this way, by performing error compensation on the positioning result information, the positioning accuracy can be improved.

Optionally, the positioning result information of the terminal device is obtained by performing error compensation on the terminal location information. The terminal location information may be terminal location information determined based on the first machine learning model information and the first measurement information, or may be terminal location information determined in other manners. This is not particularly limited.

(2) Second measurement information determined based on the first measurement information.

It may be understood that the information related to the location of the terminal device, determined based on the first information or based on the first information and the first measurement information, may include not only the positioning result information of the terminal device, but also second measurement information obtained based on further processing of the first measurement information. The second measurement information may be used to calculate the specific location of the terminal device. In other words, the first measurement information is first processed to some extent and then used for the positioning of the terminal device. In this way, a size of the first measurement information can be compressed, overheads of reporting can be reduced, and the positioning accuracy can be improved.

In an example, the second measurement information includes the first measurement information that has been sparsified, dimension reduced, or imaged. Optionally, the second measurement information can be obtained by performing preprocessing such as sparse processing, dimension reduction processing, or imaging processing on the first measurement information by using corresponding preprocessing model information (such as the first preprocessing model information).

Optionally, the second measurement information includes but is not limited to at least one of the following: a sparse channel impulse response, an imaged channel impulse response, a multipath-represented channel impulse response, a dimension-reduced graphical channel impulse response, a sparse signal waveform, a downsampled signal waveform, an imaged signal waveform, a dimension-reduced imaged channel waveform, a sparse correlation sequence, a downsampled correlation sequence, a multipath-represented correlation sequence, sparse other signal measurement results, downsampled other signal measurement results, imaged other signal measurement results, and dimension-reduced imaged other signal measurement results.

In another example, the second measurement information includes the first measurement information that has been error compensated based on the first error model information.

It may be understood that by performing error compensation on the first measurement information in advance and then performing the location calculation on the terminal device, the positioning accuracy can be improved.

In still another example, the second measurement information includes the first measurement information that has been error compensated based on the first error model information and then processing is performed by using the first preprocessing model information.

It may be understood that by error compensating the first measurement information in advance and then processing it by using the preprocessing model before calculating the location of the terminal device, the size of the first measurement information can be compressed, overheads of reporting can be reduced, and the positioning accuracy can be improved.

(3) Second machine learning model information determined based on the first machine learning model information.

It may be understood that, when the first information includes the first machine learning model information, to improve the accuracy of positioning the terminal device, the first machine learning model information may be further optimized.

In an example, the second machine learning model information includes the first machine learning model information that has been error compensated based on the first error model information.

(4) Second preprocessing model information determined based on the first preprocessing model information.

It may be understood that, when the first information includes the first preprocessing model information, to improve the accuracy of positioning the terminal device, the first preprocessing model information may be further optimized.

In an example, the second preprocessing model information includes the first preprocessing model information that has been error compensated based on the first error model information.

Optionally, in the positioning method in this embodiment of this application, different schemes for reporting third information may be implemented, where the third information may be used by the network device to implement at least one operation of determining the information related to the location of the terminal device and updating the first information.

In an example, the communications device may implement active reporting of the third information, that is, the positioning method in this embodiment of this application may further include the following content: reporting the third information to the network device, where the third information is used for the network device to determine the information related to the location of the terminal device, and/or used by the network device to update the first information.

Updating the first information refers to implementing updating of related models and parameters.

In another example, the communications device may implement passive reporting of the third information based on a corresponding indication, that is, the positioning method in this embodiment of this application may further include the following content: receiving second information, where the second information is used to indicate whether the third information is to be reported to the network device.

Optionally, the foregoing manner of receiving the second information may include but is not limited to at least one of the following.
(1) The second information is carried in a positioning assistance data information element. It may be understood that the second information may be obtained from the positioning assistance data information element (ProvideAssistanceData IE). In other words, the second information may be sent to the communications device by the network device by unicast.
(2) The second information is carried in a positioning system information block (posSIB). It may be understood that the second information may be obtained from the positioning system information block posSIB. In other words, the second information may be sent to the communications device by the network device by broadcast.

The posSIB is a cell-specific (cell specific) posSIB or an area-specific (area-specific) posSIB. In other words, the second information sent by broadcast may be broadcast within a cell, or may be broadcast within an area.

Optionally, the type of the positioning system information block posSIB used to carry at least one of the first information and the second information may be defined based on at least one of the first information and the second information. In other words, the type of the posSIB is defined based on at least one of the first information and the second information.

Optionally, the type of the positioning system information block posSIB in this embodiment may be a newly defined type, such as [posSibType4-X].

Further optionally, the third information to be reported may include but is not limited to at least one of the following: at least one piece of the information related to the location of the terminal device; and at least one piece of the first measurement information.

Further optionally, when the third information needs to be reported, the process of reporting the third information to the network device may be specifically performed as follows: having the third information carried in a first information element IE for reporting to the network device, where
the first IE includes a location information information element based on the positioning protocol (LTE Positioning Protocol, LPP) or a location information information element based on the new radio positioning protocol a (NR Positioning Protocol a, NRPPa).

Optionally, the location information information element may be a location information information element in various positioning methods, including but not limited to the E-CID, OTDOA, NR-ECID, Multi-RTT, DL-AOD, DL-TDOA, UL-AOA, UL-TDOA, and other positioning methods.

Optionally, the positioning method in this embodiment of this application may further include the following content: in a case that the first information is encrypted in a multilevel manner, receiving a key sent by the network device, where the key is corresponding to an encryption level of the first information.

It may be understood that by encrypting the first information in a multilevel manner and assigning corresponding keys, reliability and security of information transmission can be improved, information leakage can be avoided, and the sender and the receiver can have a consistent understanding. Optionally, multilevel encryption may be implemented based on required positioning accuracy, load size, and the like. In an example, a group of posSIBs corresponding to first information that can achieve lower positioning accuracy and less load are encrypted at a first level, and a first-level key is assigned accordingly; and a group of posSIBs corresponding to first information that can achieve higher positioning accuracy and larger load are encrypted at a second level, and a second-level key is assigned accordingly.

It can be learned from the above that, with a high positioning accuracy requirement, the technical solution of this application proposes a positioning technology that obtains better positioning performance in complex multipath and NLOS situations, such as a positioning technology based on machine learning, a preprocessing model, or an error model. Specifically, the network side can broadcast at least one of error model information, preprocessing model information, and machine learning model information by broadcast or unicast, and the communications device side measures or calculates the location based on the foregoing information. Optionally, the communications device side reports the corresponding compensation parameter, location information, measurement information, or the like to the network side, and the network side optimizes the model based on the information reported by the communications device side and updates the model and related parameter or implements positioning of the terminal device or the like based on the corresponding measurement information.

Referring to FIG. 2, an embodiment of this application provides a positioning method. The method is performed by a network device. Optionally, the network device may be a base station or a core network device (such as an LMF entity). The method includes the following process step.

Step 201: Send first information to a communications device, where the first information includes at least one of first machine learning model information, first preprocessing model information, and first error model information.

The first information is used for the communications device to determine information related to a location of a terminal device.

Optionally, in a case that the network device is a core network device (for example, an LMF entity), the sending first information to a communications device may be that the LMF sends the first information to the terminal device by unicast based on the positioning protocol LPP, or that the LMF sends the first information to the base station by unicast based on the new radio positioning protocol NRPPa.

In a case that the network device is a base station, the sending first information to a communications device may be that the base station sends the first information to the terminal device by broadcast by using a positioning system information block posSIB.

In this embodiment of this application, the preconfigured first information may be provided for the communications device, so that the communications device determines the information related to the location of the terminal device, so that positioning of the terminal device is further implemented, where the first information includes but is not limited to at least one of the first machine learning model information, the first preprocessing model information, and the first error model information. In this way, by providing a positioning solution based on at least one of training models such as a machine learning model, a preprocessing model, and an error model, the multipath and NLOS problems can be effectively resolved. Therefore, positioning accuracy is improved.

Optionally, the first machine learning model information includes but is not limited to: a machine learning or neural network or deep neural network model and parameters of the machine learning or neural network or deep neural network model.

The machine learning or neural network or deep neural network model includes but is not limited to: a convolutional neural network CNN, such as GoogLeNet or AlexNet; a recurrent neural network RNN and an LSTM; a recurrent neural tensor network RNTN; a generative adversarial network GAN; a deep belief network DBN; and a restricted Boltzmann machine RBM. The parameters of the machine learning or neural network or deep neural network model include but are not limited to weight, step, mean value, and variance.

Optionally, the first preprocessing model information includes but is not limited to at least one of the following: a filter parameter or model; a convolutional layer parameter or model; a pooling layer parameter or model; a discrete cosine transform DCT parameter or model; a wavelet transform parameter or model; a parameter or model of a channel impulse processing method; a parameter or model of a waveform processing method; and a parameter or model of a signal correlation sequence processing method. The model herein may refer to a function model, a network model, a downsampling model, an imaging model, or the like. The parameters herein may refer to a weight, a step, a mean value, a variance, and the like.

Optionally, the first error model information includes but is not limited to at least one of second error model information and third error model information.

The second error model information includes but is not limited to at least one of location error compensation information, measurement error compensation information, device error compensation information, and parameter adjustment information. In this way, based on the second error model information, error compensation can be performed on a positioning result, a measurement result, an error caused by a device, or a parameter error.

The third error model information includes at least one of machine learning model compensation information, preprocessing model compensation information, location error model compensation information, measurement error model compensation information, device error model compensation information, and parameter adjustment model compensation information. In this way, based on the third error model information, error compensation or adjustment can be performed on the foregoing model or parameter.

Optionally, the foregoing manner of sending the first information to the communications device may include but is not limited to at least one of the following:
(1) The first information is carried in a positioning assistance data information element. It may be understood that the first information may be carried in the positioning assistance data information element (ProvideAssistanceData IE) for sending. In other words, the first information may be sent to the communications device by the core network device (such as the LMF) by unicast.
(2) The first information is carried in a positioning system information block posSIB. It may be understood that the first information may be carried in the positioning system information block posSIB for sending. In other words, the first information may be sent to the communications device by the base station by broadcast.

The posSIB is a cell-specific (cell specific) posSIB or an area-specific (area-specific) posSIB. In other words, the first information sent by broadcast may be broadcast within a cell, or may be broadcast within an area.

Optionally, in the positioning method in this embodiment of this application, the first information is specifically used for the communications device to determine, based on first measurement information of the terminal device, the information related to the location of the terminal device, where the first measurement information is obtained by the communications device based on signal measurement.

It may be understood that when the information related to the location of the terminal device is determined based on the first information, optionally, the determining may be performed with reference to the first measurement information of the terminal device, to further improve accuracy of positioning the terminal device. The first measurement information of the terminal device may include but is not limited to at least one of the first measurement information of the terminal device obtained by the terminal device based on signal measurement and the first measurement information of the terminal device obtained by an access network device based on signal measurement.

Optionally, in the positioning method in this embodiment of this application, the first measurement information includes but is not limited to at least one of the following:
a channel impulse response of the terminal device; a signal waveform of the terminal device; a correlation sequence or waveform of the terminal device; and a signal measurement result of the terminal device, where the signal measurement result includes but is not limited to a signal measurement result obtained based on a positioning method such as an E-CID, an OTDOA, an NR-ECID, a Multi-RTT, a DL-AOD, a DL-TDOA, a UL-AOA, or a UL-TDOA.

Optionally, in the positioning method in this embodiment of this application, the information related to the location of the terminal device includes but is not limited to at least one of the following.
(1) Positioning result information of the terminal device. The positioning result information may be a specific location of the terminal device obtained by performing location calculation based on corresponding measurement information (such as the first measurement information).

In an example, if the first information includes the first machine learning model information, the positioning result information of the terminal device may include terminal location information determined based on the first machine learning model information and the first measurement information.

It may be understood that, based on the first machine learning model information and the first measurement information, corresponding location calculation can be performed, and the specific location of the terminal device can be accurately obtained. For example, the first machine learning model information may include the machine learning or neural network or deep neural network model for implementing location calculation. In this way, the first measurement information can be used as an input of the machine learning or neural network or deep neural network model, and the terminal location information can be output after model estimation and calculation. Optionally, the machine learning or neural network or deep neural network model can be obtained through pre-training based on a large amount of training data in an area that is obtained through field signal collection, where the training data includes but is not limited to a channel impulse response, RSRP, an actual location of the terminal, and the like.

In another example, if the first information includes the first error model information, the positioning result information of the terminal device may further include positioning result information of the terminal device which has been error compensated based on the first error model information. In this way, by performing error compensation on the positioning result information, the positioning accuracy can be improved.

Optionally, the positioning result information of the terminal device is obtained by performing error compensation on the terminal location information. The terminal location information may be terminal location information determined based on the first machine learning model information and the first measurement information, or may be terminal location information determined in other manners. This is not particularly limited.

(2) Second measurement information determined based on the first measurement information.

It may be understood that the information related to the location of the terminal device, determined based on the first information or based on the first information and the first measurement information, may not only include the positioning result information of the terminal device, but also second measurement information obtained based on further processing of the first measurement information. The second measurement information may be used to calculate the specific location of the terminal device. In other words, the first measurement information is first processed to some extent and then used for the positioning of the terminal device. In this way, a size of the first measurement information can be compressed, overheads of reporting can be reduced, and the positioning accuracy can be improved.

In an example, the second measurement information includes the first measurement information that has been sparsified, dimension reduced, or imaged. Optionally, the second measurement information can be obtained by performing preprocessing such as sparse processing, dimension reduction processing, or imaging processing on the first measurement information by using corresponding preprocessing model information (such as the first preprocessing model information).

Optionally, the second measurement information includes but is not limited to at least one of the following: a sparse channel impulse response, an imaged channel impulse response, a multipath-represented channel impulse response, a dimension-reduced graphical channel impulse response, a sparse signal waveform, a downsampled signal waveform, an imaged signal waveform, a dimension-reduced imaged channel waveform, a sparse correlation sequence, a downsampled correlation sequence, a multipath-represented correlation sequence, sparse other signal measurement results, downsampled other signal measurement results, imaged other signal measurement results, and dimension-reduced imaged other signal measurement results.

In another example, the second measurement information includes the first measurement information that has been error compensated based on the first error model information.

It may be understood that by performing error compensation on the first measurement information in advance and then performing the location calculation on the terminal device, the positioning accuracy can be improved.

In still another example, the second measurement information includes the first measurement information that has been error compensated based on the first error model information and then processing is performed by using the first preprocessing model information.

It may be understood that by performing error compensation on the first measurement information in advance and then processing by using the preprocessing model before calculating the location of the terminal device, the size of the first measurement information can be compressed, overheads of reporting can be reduced, and the positioning accuracy can be improved.

(3) Second machine learning model information determined based on the first machine learning model information.

It may be understood that, when the first information includes the first machine learning model information, to improve the accuracy of positioning the terminal device, the first machine learning model information may be further optimized.

In an example, the second machine learning model information includes the first machine learning model information that has been error compensated based on the first error model information.

(4) Second preprocessing model information determined based on the first preprocessing model information.

It may be understood that, when the first information includes the first preprocessing model information, to improve the accuracy of positioning the terminal device, the first preprocessing model information may be further optimized.

In an example, the second preprocessing model information includes the first preprocessing model information that has been error compensated based on the first error model information.

Optionally, in the positioning method in this embodiment of this application, different schemes for obtaining the third information may be implemented, where the third information may be used by the network device to implement at least one operation of determining the information related to the location of the terminal device and updating the first information.

Updating the first information refers to implementing updating of related models and parameters.

In an example, the third information may be actively reported by the communications device, that is, the positioning method in this embodiment of this application may further include the following content: receiving the third information reported by the communications device; and determining, based on the third information, the information related to the location of the terminal device, and/or updating the first information.

In another example, the third information may be passively reported by the communications device based on a corresponding indication, that is, the positioning method in this embodiment of this application may further include the following content: sending second information to the communications device, where the second information is used to indicate whether the communications device is to report the third information.

Optionally, in the case that the network device is a core network device (for example, an LMF entity), the sending second information to the communications device may be that the LMF sends the second information to the terminal device by unicast based on the positioning protocol LPP, or that the LMF sends the second information to the base station by unicast based on the new radio positioning protocol NRPPa.

In the case that the network device is a base station, the sending second information to the communications device may be that the base station sends the second information to the terminal device by broadcast by using a positioning system information block posSIB.

Optionally, the foregoing manner of sending the second information to the communications device may include but is not limited to at least one of the following:
(1) The second information is carried in a positioning assistance data information element. It may be understood that the second information may be carried in the positioning assistance data information element (ProvideAssistanceData IE) for sending. In other words, the second information may be sent to the communications device by the network device such as the core network device (for example, the LMF) by unicast.
(2) The second information is carried in a positioning system information block posSIB. It may be understood that the second information may be carried in the positioning system information block posSIB for sending. In other words, the second information may be sent to the communications device by the base station by broadcast.

The posSIB is a cell-specific (cell specific) posSIB or an area-specific (area-specific) posSIB. In other words, the second information sent by broadcast may be broadcast within a cell, or may be broadcast within an area.

Optionally, the type of the positioning system information block posSIB used to carry at least one of the first information and the second information may be defined based on at least one of the first information and the second information. In other words, the type of the posSIB is defined based on at least one of the first information and the second information.

Optionally, the type of the positioning system information block posSIB in this embodiment may be a newly defined type, such as [posSibType4-X].

Further optionally, the third information may include but is not limited to at least one of the following: at least one piece of the information related to the location of the terminal device; and at least one piece of the first measurement information.

Further optionally, the third information is carried in a first information element IE, where the first IE includes a location information information element based on the positioning protocol LPP or a location information information element based on the new radio positioning protocol NRPPa.

Optionally, the location information information element may be a location information information element in various positioning methods, including but not limited to the E-CID, OTDOA, NR-ECID, Multi-RTT, DL-AOD, DL-TDOA, UL-AOA, UL-TDOA, and other positioning methods.

In a case that the first information is encrypted in a multilevel manner, a key corresponding to an encryption level of the first information is sent to the communications device.

It may be understood that by encrypting the first information in a multilevel manner and assigning corresponding keys, reliability and security of information transmission can be improved, information leakage can be avoided, and the sender and the receiver can have a consistent understanding. Optionally, multilevel encryption may be implemented based on required positioning accuracy, load size, and the like. In an example, a group of posSIBs corresponding to first information that can achieve lower positioning accuracy and less load are encrypted at a first level, and a first-level key is assigned accordingly; and a group of posSIBs corresponding to first information that can achieve higher positioning accuracy and larger load are encrypted at a second level, and a second-level key is assigned accordingly.

It can be learned from the above that, with a high positioning accuracy requirement, the technical solution of this application proposes a positioning technology that obtains better positioning performance in complex multipath and NLOS situations, such as a positioning technology based on machine learning, a preprocessing model, or an error model. Specifically, the network side can broadcast at least one of error model information, preprocessing model information, and machine learning model information by broadcast or unicast, and the communications device side measures or calculates the location based on the foregoing information. Optionally, the communications device side reports the corresponding compensation parameter, location information, measurement information, or the like to the network side, and the network side optimizes the model based on the information reported by the communications device side and updates the model and related parameter or implements positioning of the terminal device or the like based on the corresponding measurement information.

Referring to FIG. 3, an embodiment of this application provides a communications device 300. The communications device 300 includes a receiving module 301 and a positioning module 303.

The receiving module 301 is configured to receive first information, where the first information includes at least one of first machine learning model information, first preprocessing model information, and first error model information; and the positioning module 303 is configured to determine, based on the first information, information related to a location of a terminal device.

Optionally, in the communications device 300 in this embodiment of this application, the positioning module 303 may be specifically configured to determine, based on the first information and first measurement information of the terminal device, the information related to the location of the terminal device, where the first measurement information is obtained based on signal measurement.

Optionally, in the communications device 300 in this embodiment of this application, the information related to the location of the terminal device includes at least one of the following: positioning result information of the terminal device; second measurement information determined based on the first measurement information; second machine learning model information determined based on the first machine learning model information; and second preprocessing model information determined based on the first preprocessing model information.

Optionally, in the communications device 300 in this embodiment of this application, the positioning result information of the terminal device includes terminal location information determined based on the first machine learning model information and the first measurement information.

Optionally, in the communications device 300 in this embodiment of this application, the positioning result information of the terminal device includes positioning result information of the terminal device which has been error compensated based on the first error model information.

Optionally, in the communications device 300 in this embodiment of this application, the second measurement information includes the first measurement information that has been sparsified, dimension reduced, or imaged.

Optionally, in the communications device 300 in this embodiment of this application, the second measurement information includes the first measurement information that has been error compensated based on the first error model information.

Optionally, in the communications device 300 in this embodiment of this application, the second measurement information includes the first measurement information that has been error compensated based on the first error model information and then processing is performed by using the first preprocessing model information.

Optionally, in the communications device 300 in this embodiment of this application, the second machine learning model information includes the first machine learning model information that has been error compensated based on the first error model information.

Optionally, in the communications device 300 in this embodiment of this application, the second preprocessing model information includes the first preprocessing model information that has been error compensated based on the first error model information.

Optionally, in the communications device 300 in this embodiment of this application, the first preprocessing model information includes at least one of the following: a filter parameter or model; a convolutional layer parameter or model; a pooling layer parameter or model; a discrete cosine transform DCT parameter or model; a wavelet transform parameter or model; a parameter or model of a channel impulse processing method; a parameter or model of a waveform processing method; and a parameter or model of a signal correlation sequence processing method.

Optionally, in the communications device 300 in this embodiment of this application, the first error model information includes at least one of second error model information and third error model information, where the second error model information includes at least one of location error compensation information, measurement error compensation information, device error compensation information, and parameter adjustment information; and the third error model information includes at least one of machine learning model compensation information, preprocessing model compensation information, location error model compensation information, measurement error model compensation information, device error model compensation information, and parameter adjustment model compensation information.

Optionally, in the communications device 300 in this embodiment of this application, the first measurement information includes at least one of the following: a channel impulse response of the terminal device; a signal waveform of the terminal device; a correlation sequence or waveform of the terminal device; and a signal measurement result of the terminal device.

Optionally, the communications device 300 in this embodiment of this application further includes a sending module, configured to report third information to a network device, where the third information is used for the network device to determine the information related to the location of the terminal device, and/or used by the network device to update the first information.

Optionally, in the communications device 300 in this embodiment of this application, the receiving module 301 may be further configured to receive second information, where the second information is used to indicate whether third information is to be reported to a network device.

Optionally, in the communications device 300 in this embodiment of this application, the third information includes at least one of the following: at least one piece of the information related to the location of the terminal device; and at least one piece of the first measurement information.

Optionally, in the communications device 300 in this embodiment of this application, the sending module may be specifically configured to have the third information carried in a first information element IE for reporting to the network device, where the first IE includes a location information information element based on the positioning protocol LPP or a location information information element based on the new radio positioning protocol NRPPa.

Optionally, in the communications device 300 in this embodiment of this application, at least one of the first information and the second information is carried in a positioning assistance data information element.

Optionally, in the communications device 300 in this embodiment of this application, at least one of the first information and the second information is carried in a positioning system information block posSIB.

Optionally, in the communications device 300 in this embodiment of this application, a type of the posSIB is defined based on at least one of the first information and the second information.

Optionally, in the communications device 300 in this embodiment of this application, the posSIB is a cell-specific posSIB or an area-specific posSIB.

Optionally, in the communications device 300 in this embodiment of this application, in a case that the first information is encrypted in a multilevel manner, the receiving module 301 may be further configured to receive a key sent by a network device, where the key is corresponding to an encryption level of the first information.

It can be understood that the communications device 300 provided in this embodiment of this application can implement the foregoing positioning method performed by the communications device 300. Related descriptions about the positioning method are all applicable to the communications device 300, and are not repeated herein. The communications device 300 may be a terminal device or an access network device.

In this embodiment of this application, the information related to the location of the terminal device may be determined based on the preconfigured first information, so that positioning of the terminal device is further implemented, where the first information includes but is not limited to at least one of the first machine learning model information, the first preprocessing model information, and the first error model information. In this way, by providing a positioning solution based on at least one of training models such as a machine learning model, a preprocessing model, and an error model, the multipath and NLOS problems can be effectively resolved. Therefore, positioning accuracy is improved.

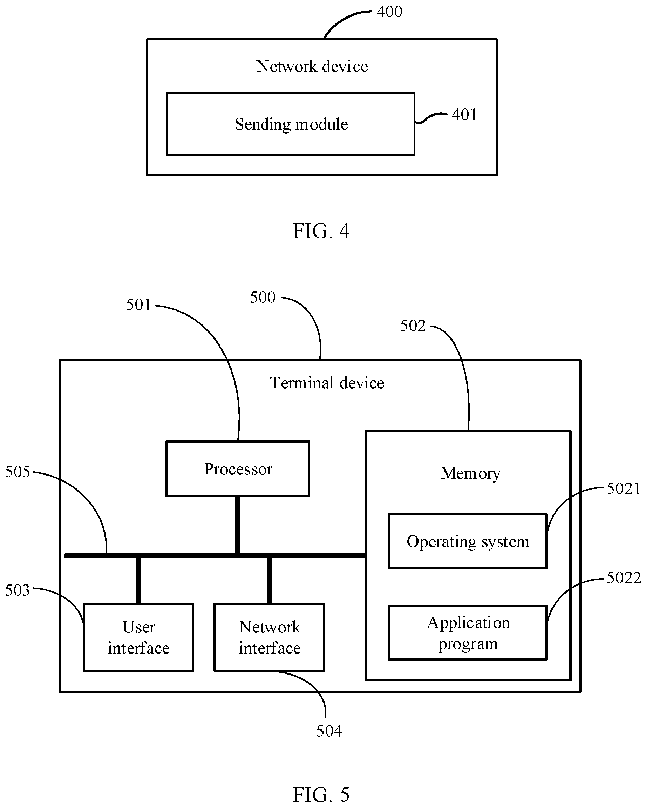

Referring to FIG. 4, an embodiment of this application provides a network device 400. The network device 400 includes a sending module 401, configured to send first information to a communications device, where the first information includes at least one of first machine learning model information, first preprocessing model information, and first error model information, where the first information is used for the communications device to determine information related to a location of a terminal device.

Optionally, in the network device 400 in this embodiment of this application, the first information is specifically used for the communications device to determine, based on first measurement information of the terminal device, the information related to the location of the terminal device, where the first measurement information is obtained by the communications device based on signal measurement.

Optionally, in the network device 400 in this embodiment of this application, the information related to the location of the terminal device includes at least one of the following: positioning result information of the terminal device; second measurement information determined based on the first measurement information; second machine learning model information determined based on the first machine learning model information; and second preprocessing model information determined based on the first preprocessing model information.

Optionally, in the network device 400 in this embodiment of this application, the positioning result information of the terminal device includes terminal location information determined based on the first machine learning model information and the first measurement information.

Optionally, in the network device 400 in this embodiment of this application, the positioning result information of the terminal device includes positioning result information of the terminal device which has been error compensated based on the first error model information.

Optionally, in the network device 400 in this embodiment of this application, the second measurement information includes the first measurement information that has been sparsified, dimension reduced, or imaged.

Optionally, in the network device 400 in this embodiment of this application, the second measurement information includes the first measurement information that has been error compensated based on the first error model information.

Optionally, in the network device 400 in this embodiment of this application, the second measurement information includes the first measurement information that has been error compensated based on the first error model information and then processing is performed by using the first preprocessing model information.

Optionally, in the network device 400 in this embodiment of this application, the second machine learning model information includes the first machine learning model information that has been error compensated based on the first error model information.

Optionally, in the network device 400 in this embodiment of this application, the second preprocessing model information includes the first preprocessing model information that has been error compensated based on the first error model information.

Optionally, in the network device 400 in this embodiment of this application, the first preprocessing model information includes at least one of the following: a filter parameter or model; a convolutional layer parameter or model; a pooling layer parameter or model; a discrete cosine transform DCT parameter or model; a wavelet transform parameter or model; a parameter or model of a channel impulse processing method; a parameter or model of a waveform processing method; and a parameter or model of a signal correlation sequence processing method.

Optionally, in the network device 400 in this embodiment of this application, the first error model information includes at least one of second error model information and third error model information, where the second error model information includes at least one of location error compensation information, measurement error compensation information, device error compensation information, and parameter adjustment information; and the third error model information includes at least one of machine learning model compensation information, preprocessing model compensation information, location error model compensation information, measurement error model compensation information, device error model compensation information, and parameter adjustment model compensation information.

Optionally, in the network device 400 in this embodiment of this application, the first measurement information includes at least one of the following: a channel impulse response of the terminal device; a signal waveform of the terminal device; a correlation sequence or waveform of the terminal device; and a signal measurement result of the terminal device.

Optionally, the network device 400 in this embodiment of this application further includes a receiving module and a processing module.

The receiving module is configured to receive third information reported by the communications device; and the processing module is configured to determine, based on the third information, the information related to the location of the terminal device, and/or update the first information.

Optionally, in the network device 400 in this embodiment of this application, the sending module 401 may be further configured to send second information to the communications device, where the second information is used to indicate whether the communications device is to report third information.

Optionally, in the network device 400 in this embodiment of this application, the third information includes at least one of the following: at least one piece of the information related to the location of the terminal device; and at least one piece of the first measurement information.

Optionally, in the network device 400 in this embodiment of this application, the third information is carried in a first information element IE, where the first IE includes a location information information element based on the positioning protocol LPP or a location information information element based on the new radio positioning protocol NRPPa.

Optionally, in the network device 400 in this embodiment of this application, at least one of the first information and the second information is carried in a positioning assistance data information element.

Optionally, in the network device 400 in this embodiment of this application, at least one of the first information and the second information is carried in a positioning system information block posSIB.

Optionally, in the network device 400 in this embodiment of this application, a type of the posSIB is defined based on at least one of the first information and the second information.

Optionally, in the network device 400 in this embodiment of this application, the posSIB is a cell-specific posSIB or an area-specific posSIB.

Optionally, in the network device 400 in this embodiment of this application, the sending module 401 may be further configured to: in a case that the first information is encrypted in a multilevel manner, send, to the communications device, a key corresponding to an encryption level of the first information.

It can be understood that the network device 400 provided in this embodiment of this application can implement the foregoing positioning method performed by the network device 400. Related descriptions about the positioning method are all applicable to the network device 400, and are not repeated herein. The network device 400 may be a core network device.

In this embodiment of this application, the preconfigured first information may be provided for the communications device, so that the communications device determines the information related to the location of the terminal device, so that positioning of the terminal device is further implemented, where the first information includes but is not limited to at least one of the first machine learning model information, the first preprocessing model information, and the first error model information. In this way, by providing a positioning solution based on at least one of training models such as a machine learning model, a preprocessing model, and an error model, the multipath and NLOS problems can be effectively resolved. Therefore, positioning accuracy is improved.

FIG. 5 is a block diagram of a terminal device according to another embodiment of this application. The terminal device 500 shown in FIG. 5 includes at least one processor 501, a memory 502, at least one network interface 504, and a user interface 503. The components in the terminal device 500 are coupled together through a bus system 505. It may be understood that the bus system 505 is configured to implement connection and communication between these components. In addition to a data bus, the bus system 505 further includes a power bus, a control bus, and a status signal bus. However, for clarity of description, various buses are marked as the bus system 505 in FIG. 5.

The user interface 503 may include a display, a keyboard, a pointing device (for example, a mouse or a trackball (trackball)), a touch panel or a touchscreen, or the like.

It may be understood that the memory 502 in this embodiment of this application may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), and an electrically erasable programmable read-only memory (Electrically EPROM, EEPROM), or a flash memory. The volatile memory may be a random access memory (Random Access Memory, RAM), which is used as an external cache. As exemplary rather than restrictive description, many forms of RAMs can be used, such as a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synchlink DRAM, SLDRAM), and a direct Rambus random access memory (Direct Rambus RAM, DRRAM). The memory 502 in a system and method described in this embodiment of this application is intended to include but is not limited to these and any other suitable types of memories.

In some implementations, the memory 502 stores the following elements: executable modules or data structures, or a subset thereof, or an extended set thereof: an operating system 5021 and an application program 5022.

The operating system 5021 includes various system programs or instructions, such as a framework layer, a core library layer, and a driver layer, for implementing various basic services and processing hardware-based tasks. The application program or instruction 5022 includes various application programs or instructions, such as a media player (Media Player), and a browser (Browser), and is configured to implement various application services. A program or instructions for implementing the method in the embodiment of this application may be included in the application program or instruction 5022.

In this embodiment of this application, the terminal device 500 further includes a program or instructions stored in the memory 502 and capable of running on the processor 501. When the program or instructions are executed by the processor 501, the following steps are implemented:
receiving first information, where the first information includes at least one of first machine learning model information, first preprocessing model information, and first error model information; and determining, based on the first information, information related to a location of the terminal device.

In this embodiment of this application, the information related to the location of the terminal device may be determined based on the preconfigured first information, so that positioning of the terminal device is further implemented, where the first information includes but is not limited to at least one of the first machine learning model information, the first preprocessing model information, and the first error model information. In this way, by providing a positioning solution based on at least one of training models such as a machine learning model, a preprocessing model, and an error model, the multipath and NLOS problems can be effectively resolved. Therefore, positioning accuracy is improved.

The foregoing method disclosed by the embodiment of this application may be applied to the processor 501, or implemented by the processor 501. The processor 501 may be an integrated circuit chip that has a signal processing capability. During implementation, the steps of the foregoing method may be completed by hardware integrated logic circuits in the processor 501 or instructions in the form of software. The processor 501 may be a general-purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a discrete gate or transistor logic device, or a discrete hardware component. The processor may implement or perform various methods, steps, and logical block diagrams that are disclosed in the embodiments of this application. The general-purpose processor may be a microprocessor or any regular processor. The steps of the methods disclosed with reference to the embodiments of this application may be directly performed and completed by using a hardware decoding processor, or may be performed and completed by using a combination of hardware and a software module in a decoding processor. The software module may be located in a readable storage medium that is mature in the art, such as a random access memory, a flash memory, a read-only memory, a programmable read-only memory or electrically erasable programmable memory, or a register. The readable storage medium is located in the memory 502, and the processor 501 reads information in the memory 502, and completes the steps of the foregoing method in combination with its hardware. Specifically, the readable storage medium stores a program or instructions, and when the program or instructions are executed by the processor 501, the steps of the foregoing positioning method embodiment are implemented.

It may be understood that the embodiments described in the embodiments of this application may be implemented by hardware, software, firmware, middleware, microcode, or a combination thereof. For hardware implementation, the processing unit may be implemented in one or more application specific integrated circuits (Application Specific Integrated Circuits, ASIC), digital signal processors (Digital Signal Processor, DSP), Digital Signal Processor devices (DSP Device, DSPD), programmable logic devices (Programmable Logic Device, PLD), field-programmable gate arrays (Field-Programmable Gate Array, FPGA), general-purpose processors, controllers, microcontrollers, microprocessors, and other electronic units for performing the functions described in this application, or a combination thereof.

For software implementation, the technologies described in the embodiments of this application may be implemented by modules (for example, processes or functions) that perform the functions described in the embodiments of this application. Software code may be stored in the memory and executed by the processor. The memory may be implemented in or outside the processor.

The terminal device 500 can implement the processes implemented by a terminal device in the foregoing embodiment. To avoid repetition, details are not described herein again.

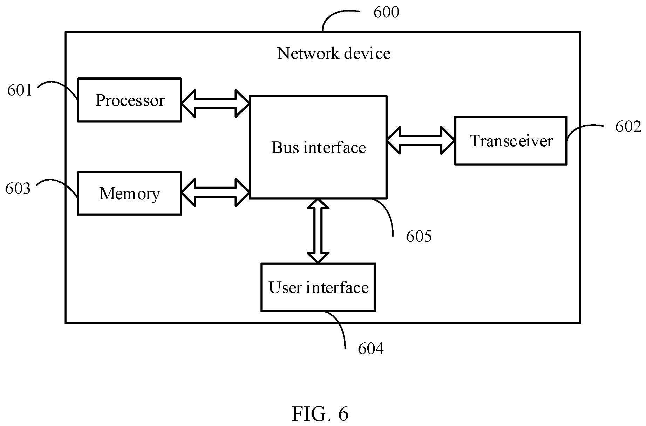

FIG. 6 is a structural diagram of a network device to which an embodiment of this application is applied. The network device 600 may be a base station or LMF. In a case that the network device 600 is a base station, the network device 600 can implement details of the steps of the method embodiment corresponding to claims 1 to 21, or can implement details of the steps of the method embodiment corresponding to claims 22 to 42, with the same effect achieved. In a case that the network device 600 is an LMF, the network device 600 can implement details of the steps of the method embodiment corresponding to claims 22 to 42, with the same effect achieved. As shown in FIG. 6, the network device 600 includes a processor 601, a transceiver 602, a memory 603, a user interface 604, and a bus interface 605. In this embodiment of this application, the network device 600 further includes a program or instructions stored in the memory 603 and capable of running on the processor 601.

In a case that the network device 600 is a base station, when the program or instructions are executed by the processor 601, the following steps can be implemented: receiving first information, where the first information includes at least one of first machine learning model information, first preprocessing model information, and first error model information; and determining, based on the first information, information related to a location of a terminal device.

In this embodiment of this application, the information related to the location of the terminal device can be determined based on the preconfigured first information, where the first information includes but is not limited to at least one of the first machine learning model information, the first preprocessing model information, and the first error model information. In this way, by providing a positioning solution based on at least one of training models such as a machine learning model, a preprocessing model, and an error model, the multipath and NLOS problems can be effectively resolved. Therefore, positioning accuracy is improved.

Alternatively, in a case that the network device 600 is a base station or a core network device (such as an LMF), when the program or instructions are executed by the processor 601, the following step can be implemented: sending first information to a communications device, where the first information includes at least one of first machine learning model information, first preprocessing model information, and first error model information, where the first information is used for the communications device to determine information related to a location of a terminal device.

In this embodiment of this application, the preconfigured first information may be provided for the communications device, so that the communications device determines the information related to the location of the terminal device, so that positioning of the terminal device is further implemented, where the first information includes but is not limited to at least one of the first machine learning model information, the first preprocessing model information, and the first error model information. In this way, by providing a positioning solution based on at least one of training models such as a machine learning model, a preprocessing model, and an error model, the multipath and NLOS problems can be effectively resolved. Therefore, positioning accuracy is improved.

In FIG. 6, a bus architecture may include any quantity of interconnect buses and bridges, and specifically connects together circuits that are of one or more processors represented by the processor 601 and of a memory represented by the memory 603. The bus architecture may further interconnect various other circuits such as a peripheral device, a voltage regulator, and a power management circuit. These are all well known in the art, and therefore are not further described in this specification. The bus interface 605 provides interfaces. The transceiver 602 may be a plurality of components, including a transmitter and a receiver, and provides units for communicating with a variety of other apparatuses on a transmission medium. For different user equipments, the user interface 604 may also be an interface that can be externally or internally connected to a required device. The connected device includes but is not limited to a keypad, a display, a speaker, a microphone, a joystick, and the like.

The processor 601 is responsible for management of the bus architecture and general processing, and the memory 603 is capable of storing data for use by the processor 601 in performing an operation.

An embodiment of this application further provides a readable storage medium. The readable storage medium stores a program or instructions. When the program or instructions are executed by a processor, the processes of the foregoing positioning method embodiment applied to the communications device and/or the foregoing positioning method embodiment applied to the network device are implemented, with the same technical effect achieved. To avoid repetition, details are not described herein again. The readable storage medium includes a computer-readable storage medium, for example, a computer read-only memory (Read-Only Memory, ROM), a random access memory (Random Access Memory, RAM), a magnetic disk, or an optical disc.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The embodiments of this application are described above with reference to the accompanying drawings. However, this application is not limited to the foregoing specific embodiments. The foregoing specific embodiments are merely illustrative rather than restrictive. Inspired by this application, a person of ordinary skill in the art can still derive a plurality of variations without departing from the essence of this application and the protection scope of the claims. All these variations shall fall within the protection scope of this application.

## Claims

1. A positioning method applied to a communications device, wherein the method comprises:
receiving first information, wherein the first information comprises at least one of first machine learning model information, first preprocessing model information, and first error model information; and
determining, based on the first information, information related to a location of a terminal device.

2. The method according to claim 1, wherein the determining, based on the first information, information related to a location of a terminal device comprises:
determining, based on the first information and first measurement information of the terminal device, the information related to the location of the terminal device, wherein the first measurement information is obtained based on signal measurement.

3. The method according to claim 2, wherein the information related to the location of the terminal device comprises at least one of the following:
positioning result information of the terminal device;
second measurement information determined based on the first measurement information;
second machine learning model information determined based on the first machine learning model information; and
second preprocessing model information determined based on the first preprocessing model information.

4. The method according to claim 3, wherein the positioning result information of the terminal device comprises terminal location information determined based on the first machine learning model information and the first measurement information.

5. The method according to claim 3, wherein the positioning result information of the terminal device comprises positioning result information of the terminal device which has been error compensated based on the first error model information.

6. The method according to claim 3, wherein the second measurement information comprises the first measurement information that has been sparsified, dimension reduced, or imaged.

7. The method according to claim 3, wherein the second measurement information comprises the first measurement information that has been error compensated based on the first error model information.

8. The method according to claim 3, wherein the second machine learning model information comprises the first machine learning model information that has been error compensated based on the first error model information.

9. The method according to claim 3, wherein the second preprocessing model information comprises the first preprocessing model information that has been error compensated based on the first error model information.

10. The method according to claim 1, wherein the first preprocessing model information comprises at least one of the following:
a filter parameter or model;
a convolutional layer parameter or model;
a pooling layer parameter or model;
a discrete cosine transform DCT parameter or model;
a wavelet transform parameter or model;
a parameter or model of a channel impulse processing method;
a parameter or model of a waveform processing method; and
a parameter or model of a signal correlation sequence processing method.

11. The method according to claim 1, wherein the first error model information comprises at least one of second error model information and third error model information, wherein
the second error model information comprises at least one of location error compensation information, measurement error compensation information, device error compensation information, and parameter adjustment information; and
the third error model information comprises at least one of machine learning model compensation information, preprocessing model compensation information, location error model compensation information, measurement error model compensation information, device error model compensation information, and parameter adjustment model compensation information.

12. The method according to claim 2, wherein the first measurement information comprises at least one of the following:
a channel impulse response of the terminal device;
a signal waveform of the terminal device;
a correlation sequence or waveform of the terminal device; and
a signal measurement result of the terminal device.

13. The method according to claim 2, wherein the method further comprises:
reporting third information to a network device, wherein
the third information is used for the network device to determine the information related to the location of the terminal device, and/or
used by the network device to update the first information.

14. The method according to claim 2, wherein the method further comprises:
receiving second information, wherein the second information is used to indicate whether third information is to be reported to a network device.

15. The method according to claim 13 or 14, wherein the third information comprises at least one of the following:
at least one piece of the information related to the location of the terminal device; and
at least one piece of the first measurement information.

16. The method according to claim 13 or 14, wherein the reporting third information to a network device comprises:
reporting the third information to the network device by having the third information carried in a first information element IE, wherein
the first IE comprises a location information information element based on the positioning protocol LPP or a location information information element based on the new radio positioning protocol NRPPa.

17. The method according to claim 14, wherein at least one of the first information and the second information is carried in a positioning assistance data information element.

18. The method according to claim 14, wherein at least one of the first information and the second information is carried in a positioning system information block posSIB.

19. The method according to claim 18, wherein a type of the posSIB is defined based on at least one of the first information and the second information.

20. The method according to claim 18, wherein the posSIB is a cell-specific posSIB or an area-specific posSIB.

21. The method according to claim 1, wherein the method further comprises:
in a case that the first information is encrypted in a multilevel manner, receiving a key sent by a network device, wherein the key is corresponding to an encryption level of the first information.

22. A positioning method applied to a network device, wherein the method comprises:
sending first information to a communications device, wherein the first information comprises at least one of first machine learning model information, first preprocessing model information, and first error model information, wherein
the first information is used for the communications device to determine information related to a location of a terminal device.

23. The method according to claim 22, wherein the first information is specifically used for the communications device to determine, based on first measurement information of the terminal device, the information related to the location of the terminal device, wherein the first measurement information is obtained by the communications device based on signal measurement.

24. The method according to claim 23, wherein the information related to the location of the terminal device comprises at least one of the following:
positioning result information of the terminal device;
second measurement information determined based on the first measurement information;
second machine learning model information determined based on the first machine learning model information; and
second preprocessing model information determined based on the first preprocessing model information.

25. The method according to claim 24, wherein the positioning result information of the terminal device comprises terminal location information determined based on the first machine learning model information and the first measurement information.

26. The method according to claim 24, wherein the positioning result information of the terminal device comprises positioning result information of the terminal device which has been error compensated based on the first error model information.

27. The method according to claim 24, wherein the second measurement information comprises the first measurement information that has been sparsified, dimension reduced, or imaged.

28. The method according to claim 24, wherein the second measurement information comprises the first measurement information that has been error compensated based on the first error model information.

29. The method according to claim 24, wherein the second machine learning model information comprises the first machine learning model information that has been error compensated based on the first error model information.

30. The method according to claim 24, wherein the second preprocessing model information comprises the first preprocessing model information that has been error compensated based on the first error model information.

31. The method according to claim 22, wherein the first preprocessing model information comprises at least one of the following:
a filter parameter or model;
a convolutional layer parameter or model;
a pooling layer parameter or model;
a discrete cosine transform DCT parameter or model;
a wavelet transform parameter or model;
a parameter or model of a channel impulse processing method;
a parameter or model of a waveform processing method; and
a parameter or model of a signal correlation sequence processing method.

32. The method according to claim 22, wherein the first error model information comprises at least one of second error model information and third error model information, wherein
the second error model information comprises at least one of location error compensation information, measurement error compensation information, device error compensation information, and parameter adjustment information; and
the third error model information comprises at least one of machine learning model compensation information, preprocessing model compensation information, location error model compensation information, measurement error model compensation information, device error model compensation information, and parameter adjustment model compensation information.

33. The method according to claim 23, wherein the first measurement information comprises at least one of the following:
a channel impulse response of the terminal device;
a signal waveform of the terminal device;
a correlation sequence or waveform of the terminal device; and
a signal measurement result of the terminal device.

34. The method according to claim 23, wherein the method further comprises:
receiving third information reported by the communications device; and
determining, based on the third information, the information related to the location of the terminal device, and/or updating the first information.

35. The method according to claim 23, wherein the method further comprises:
sending second information to the communications device, wherein the second information is used to indicate whether the communications device is to report third information.

36. The method according to claim 34 or 35, wherein the third information comprises at least one of the following:
at least one piece of the information related to the location of the terminal device; and
at least one piece of the first measurement information.

37. The method according to claim 34 or 35, wherein the third information is carried in a first information element IE, wherein the first IE comprises a location information information element based on the positioning protocol LPP or a location information information element based on the new radio positioning protocol NRPPa.

38. The method according to claim 35, wherein at least one of the first information and the second information is carried in a positioning assistance data information element.

39. The method according to claim 35, wherein at least one of the first information and the second information is carried in a positioning system information block posSIB.

40. The method according to claim 39, wherein a type of the posSIB is defined based on at least one of the first information and the second information.

41. The method according to claim 39, wherein the posSIB is a cell-specific posSIB or an area-specific posSIB.

42. The method according to claim 22, wherein the method further comprises:
in a case that the first information is encrypted in a multilevel manner, sending, to the communications device, a key corresponding to an encryption level of the first information.

43. A communications device, comprising:
a receiving module, configured to receive first information, wherein the first information comprises at least one of first machine learning model information, first preprocessing model information, and first error model information; and
a positioning module, configured to determine, based on the first information, information related to a location of a terminal device.

44. The communications device according to claim 43, wherein the positioning module is configured to determine, based on the first information and first measurement information of the terminal device, the information related to the location of the terminal device, wherein the first measurement information is obtained based on signal measurement.

45. The communications device according to claim 44, wherein the information related to the location of the terminal device comprises at least one of the following:
positioning result information of the terminal device;
second measurement information determined based on the first measurement information;
second machine learning model information determined based on the first machine learning model information; and
second preprocessing model information determined based on the first preprocessing model information.

46. The communications device according to claim 43, wherein the first preprocessing model information comprises at least one of the following:
a filter parameter or model;
a convolutional layer parameter or model;
a pooling layer parameter or model;
a discrete cosine transform DCT parameter or model;
a wavelet transform parameter or model;
a parameter or model of a channel impulse processing communications device;
a parameter or model of a waveform processing communications device; and
a parameter or model of a signal correlation sequence processing communications device.

47. The communications device according to claim 43, wherein the first error model information comprises at least one of second error model information and third error model information, wherein
the second error model information comprises at least one of location error compensation information, measurement error compensation information, device error compensation information, and parameter adjustment information; and
the third error model information comprises at least one of machine learning model compensation information, preprocessing model compensation information, location error model compensation information, measurement error model compensation information, device error model compensation information, and parameter adjustment model compensation information.

48. The communications device according to claim 44, wherein the first measurement information comprises at least one of the following:
a channel impulse response of the terminal device;
a signal waveform of the terminal device;
a correlation sequence or waveform of the terminal device; and
a signal measurement result of the terminal device.

49. The communications device according to claim 44, wherein the communications device further comprises:
a sending module, configured to report third information to a network device, wherein
the third information is used for the network device to determine the information related to the location of the terminal device, and/or
used by the network device to update the first information.

50. The communications device according to claim 44, wherein the receiving module is further configured to receive second information, wherein the second information is used to indicate whether third information is to be reported to a network device.

51. The communications device according to claim 43, wherein in a case that the first information is encrypted in a multilevel manner, the receiving module is further configured to receive a key sent by a network device, wherein the key is corresponding to an encryption level of the first information.

52. A network device, comprising:
a sending module, configured to send first information to a communications device, wherein the first information comprises at least one of first machine learning model information, first preprocessing model information, and first error model information, wherein
the first information is used for the communications device to determine information related to a location of a terminal device.

53. A terminal device, comprising a memory, a processor, and a program or instructions stored in the memory and capable of running on the processor, wherein when the program or instructions are executed by the processor, the steps of the method according to any one of claims 1 to 21 are implemented.

54. A network device, comprising a memory, a processor, and a program or instructions stored in the memory and capable of running on the processor, wherein when the program or instructions are executed by the processor, the steps of the method according to any one of claims 1 to 21 are implemented, or when the program or instructions are executed by the processor, the steps of the method according to any one of claims 22 to 42 are implemented.

55. A readable storage medium, wherein the readable storage medium stores a program or instructions, and when the program or instructions are executed by a processor, the steps of the method according to any one of claims 1 to 21 are implemented, or when the program or instructions are executed by a processor, the steps of the method according to any one of claims 22 to 42 are implemented.

56. A terminal device, wherein the communications device is configured to perform the steps of the method according to any one of claims 1 to 21.

57. A network device, wherein the network device is configured to perform the steps of the method according to any one of claims 1 to 21 or the steps of the method according to any one of claims 22 to 42.

58. A computer program product, wherein when the computer program product is executed by at least one processor, the steps of the method according to any one of claims 1 to 21 or the steps of the method according to any one of claims 22 to 42 are implemented.
